# EUROPEAN PATENT APPLICATION

(11) **EP 4 321 024 A1**
(43) Date of publication of application: **14.02.2024**
(21) Application number: 22306215.9
(22) Date of filing: 11.08.2022
(51) Int. Cl.: A01N 43/12, A01P 21/00

(54) **USE OF MELATONIN AND/OR PRECURSOR THEREOF FOR DECREASING THE PLANT NITRATE CONTENT**

(71) Applicant: Agro Innovation International, 35400 Saint-Malo (FR); Universidad de Navarra, 31008 Pamplona - Navarra (ES)
(72) Inventor: CRUZ, Florence, Saint-Malo (FR); GARCIA-MINA, Jose-Maria, Pamplona (ES); PLUCHON, Sylvain, Saint-Malo (FR); MOVILA, Maria, Pamplona (ES)
(74) Representative: Cabinet Beau de Loménie

(57) **Abstract**

The present invention relates to the use of melatonin and/or a precursor thereof for decreasing the plant nitrate content. The invention also concerns a method for decreasing plant nitrate content of a plant by supplying melatonin and/or a precursor thereof to the plant, a composition comprising melatonin and/or a precursor thereof and a plant cultivation process for decreasing plant nitrate content.

## Description

### Technical field

The invention concerns the field of agriculture. The present invention relates to a method for decreasing the plant nitrate content.

### Prior art

Nitrogen is an essential element to be assimilated by plants that affects the growth, the yield and the quality of plants. Indeed, plants need to assimilate essential element, such as nitrogen, for the synthesis of proteins and thus their growth. Nitrogen plays an important role regarding the yield and the quality of the plant cultivated.

During their culture, the plants are commonly supplemented with fertilizing compositions comprising a source of nitrogen in order to prevent nitrogen deficiency. This supply allows to provide the plant with the adequate quantity of nitrogen to ensure the optimal growth of the plant.

Nitrate (NO₃⁻) is an important source of nitrogen for plants, it can be found in nitrogen-based fertilizing compositions or naturally in the soil. For instance, in hydroponic cultivation methods, nitrogen is supplied to the plant in the form of water soluble nitrates.

However, depending on various factors such as the cultivation process, the plant variety, the growing season or the type of nitrogen fertilizer used, the plant can accumulate large amounts of nitrate, especially vegetable or fruit plants and more especially leafy vegetable plants [1]. Fruits and vegetables are daily consumed by humans as they contain a lot of vitamins and antioxidants which confer important health benefits. However, depending on various factors, the fruits or vegetables that are consumed by humans can contain a large amount of nitrate which metabolites can represent a significant risk of health issues. Approximately 80% of dietary nitrates are derived from human vegetable consumption.

Dietary nitrates can acquire a biologic activity during the storage of the food as well as in human digestive system, through the enzyme nitrate reductase which converts nitrate (NO₃⁻) to nitrite (NO₂⁻). Nitrite can reacts with amines and/or amides, especially in the stomach, to form N-nitroso compounds such as nitrosamines which are recognized as human carcinogens [2].

As a consequence, the World Health Organization (WHO) has defined an acceptable daily intake (ADI) of nitrates from the diet according to the weight of the person of 3.7 mg NO₃⁻/ kg / day, generally reduced to 250 mg / day for a person weighing 70 kg [3].

The patent document CN101849497 (A) discloses a method for reducing nitrate content in a soilless cultivation system of leafy vegetables by treating them with inorganic osmolyte solutions comprising chloride and sulfate salts of potassium and ammonium during 2 to 5 days prior the harvest, with a supplementation of artifical lighting. However, increasing the concentration of some inorganic ions above a certain threshold can perturb the plant cell metabolism and lead to a decrease of the cultivated vegetable product quality. The increase of light in terms of intensity and/or duration has been shown to reduce nitrate content in leafy plants. However, this method can be implemented only in greenhouse cultivation systems. Additionally, the increase of light exposure can cause, even indirectly, some leaf burn in leafy vegetables due to overheating and drying of the leaf surface. The patent document CN101690485A proposes to supply a plant with potassium tartrate as well as auxins and cytokinines to reduce the nitrate content. However, this method is expensive and is difficult to implement because the doses of auxins and cytokinines to be applied to the plant depend on the physiological status of the plant.

Therefore, there is a need to develop new methods for decreasing the nitrate content in a plant which overcome the drawbacks of the existing methods. According to this objective, the Applicant has demonstrated that the use of melatonin and/or a precursor thereof allows decreasing the plant nitrate content. In particular, knowing that it is important to provide sufficient amount of nitrogen to the plant crops during their growth as mentioned above, such as in the form of nitrate (NO₃⁻), it exists a need to provide a method wherein nitrate may be supplied to the plant during the growth cycle while allowing to reduce the content of nitrates in edible plants before their consumption, especially by humans.

The present invention provides a method for decreasing the nitrate content in a plant by supplying the plant with melatonin and/or a precursor thereof. This solution is particularly interesting when it is implemented shortly before the plant harvest so as to decrease the nitrate content of the plant to be consumed.

The solution proposed by the present invention can be implemented on an individual or industrial scale. Additionally, the solution proposed is cost effective and easy to implement. Advantageously, the solution proposed by the present invention does not have negative impact on the growth of the plant nor on the yield or on the quality of the plant produce. Another advantageous aspect of the solution proposed by the present invention, is that it does not use any chemical compound potentially noxious for human health and/or the environment.

### Summary of the invention

In accordance with a first aspect, the invention provides a method for decreasing plant nitrate content, said method comprising supplying melatonin and/or a precursor thereof to the plant, whereby the plant nitrate content is decreased.

In accordance with a second aspect, the invention provides a use of melatonin and/or a precursor thereof for decreasing the plant nitrate content.

In accordance with a third aspect, the invention provides a composition comprising (i) from 10 µM to 2 mM, preferably from 20 µM to 1mM, of melatonin and/or precursor thereof, and (ii) a surfactant.

In accordance with a fourth aspect, the invention provides a plant cultivation process comprising the successive following steps:
a) Supplying melatonin and/or precursor thereof to a plant, whereby the plant nitrate content is decreased;
b) Harvesting the plant within 1 to 5 days after step a), such as within 1 to 3 days or within 1 to 2 days after step a), or within 1 to 4 weeks after step a) preferably within 1 to 3 weeks after step a).

### Detailed description of the invention

The Applicant surprisingly demonstrated that supplying a plant with melatonin and/or a precursor thereof, preferably tryptophan, allows decreasing the nitrate content of the plant.

In accordance with a first aspect, the invention provides a method for decreasing plant nitrate content, said method comprising supplying melatonin and/or a precursor thereof to the plant, whereby the plant nitrate content is decreased.

In accordance with a second aspect, the invention provides a use of melatonin and/or a precursor thereof for decreasing the plant nitrate content.

In the context of the present invention, the expression "plant" is used to designate the plant considered as a whole, including its root system, its vegetative system, its grains, seeds, and fruits.

In the context of the invention, the term "nitrate" means the polyanionic ion with the chemical formula "NO₃⁻".

According to the present invention, the term "melatonin" refers to the compound of chemical formula *N-*acetyl-5-methoxy tryptamine. In mammals, melatonin is naturally released by the pineal gland at night. Melatonin can also be found in the environment as a natural form, and can be synthesized in and/or taken up by plants as phytomelatonin. The content of phytomelatonin in plants depends on various parameters such as the plant, the algae or the seaweed specie or place of growth.

In plants, phytomelatonin plays various roles such as antioxidant, growth promoter or even as a regulator of plant circadian rythm [4].

Two major pathways have been proposed for the biosynthesis of melatonin by plants: the first one is the tryptophan/tryptamine/serotonin/N-acetylserotonin/melatonin pathway, which may occur under normal growth conditions; the other one is the tryptophan/tryptamine/serotonin/5-methoxytryptamine/melatonin pathway, which may occur when plants produce large amounts of serotonin, for example, upon senescence.

In the context of the invention, the terms "precursor thereof" (i.e. "precursor of melatonin"), refer to starting compounds or intermediate compounds of the melatonin biosynthesis pathway in plants. According to the present invention, the melatonin precursors may be selected from tryptophan, tryptamine, 5-methoxytryptamine, N-acetylserotonin or serotonin, preferably the melatonin precursor is tryptophan. In reference to the terms "precursor thereof" the singular is used for clarity reasons, but in the context of the invention these terms should be interpreted as one or several precursors of melatonin.

In a particular embodiment of the method or use according to the invention, melatonin is synthetic melatonin and/or phytomelatonin, preferably synthetic melatonin and phytomelatonin.

According to a particular and advantageous embodiment of the method or use of the present invention, melatonin is supplied to the plant as a combination of synthetic melatonin and phytomelatonin. Indeed, the Applicant surprisingly found that supplying a plant with a combination of synthetic melatonin and phytomelatonin provides a greater decrease of the plant nitrate content in comparison to natural melatonin alone or synthetic melatonin alone.

In a particular embodiment of the method or use according to the invention, the precursor of melatonin is tryptophan.

Tryptophan is an amino acid (symbol Trp or W) and is the starting compound of the melatonin biosynhesis by plants.

According to an embodiment of the method or use of the present invention, melatonin, synthetic or natural form, is used in combination with tryptophan as synthetic or natural form such as in plants or extracts naturally comprising tryptophan or such as biosynthetic tryptophan. According to the present invention, the terms "biosynthetic tryptophan" refer to tryptophan obtained by bacteria fermentation. For instance, biosynthetic tryptophan may be produced by microbial fermentation with wild type or genetically engineered bacterial strains such as *Escherichia coli, Corynebacterium glutamicum, Brevibacterium sp, Proteus sp, Erwinia sp* and/or *Bacillus subtilis.* In a prefered embodiment, melatonin is phytomelatonin, and tryptophan is natural form of tryptophan and even preferably biosynthetic form of tryptophan.

Phytomelatonin, and/or precursors thereof, such as tryptophan, may come from plants, such as algae. Phytomelatonin and/or precursors thereof according to the invention may be used as dry material or extracts, preferably aqueous extracts, obtained from algae and/or plants. According to an aspect of the invention, phytomelatonin is obtained from one or more of the following algae: Spirulinaceae such as *Spirulina,* Chlorellaceae such as *Chlorella,* Ulvaceae such as *Ulva sp,* Fucaceae such as *Ascophyllum nodosum, Fucus vesiculosus, Fucus serratus* and/or from one or more of the following plants: aromatic or medicinal plants such as thyme or *Hypericum perforatum* known as St John's Wort plant, leguminous plants such as lens or soya, cereals such as wheat or rice, and/or other sources such as coffee, nuts.

According to a preferred aspect of the invention, phytomelatonin is obtained from one or more of the following algae such as *Spirulina, Ulva sp preferably Ulva Lactuca, Fucus vesiculosus, Fucus serratus, Ascophyllum nodosum* and/or from one or more of the following plants: soya, wheat, rice. In a preferred embodiment of the invention, the phytomelatonin comes from *Spirulina* or *Ulva lactuca* either as dry material or extract, preferably *Spirulina,* and more preferably *Spirulina* as dry matter.

According to the present invention, the natural form of tryptophan may be used as dry material or extracts, preferably aqueous extracts, and may is obtained from one or more of the following algae: Spirulinaceae such as *Spirulina,* Chlorellaceae such as *Chlorella,* Ulvaceae such as *Ulva sp,* Fucaceae such as *Ascophyllum nodosum, Fucus serratus* and/or from one or several of the following plants: leguminous plants such as soya, cereals such as wheat or rice.

According to a preferred aspect of the invention the natural form of tryptophan is obtained from one or more of the following algae: *Spirulina, Chlorella, Ulva Lactuca, , Fucus serratus, Laminaria digitata, Ascophyllum nodosum* and/or from one or more of the following plants: soya, wheat, apple trees.

In a preferred embodiment of the invention, the natural form of tryptophan is obtained from *Ascophyllum nodosum* or soya either as dry material or extract, preferably from *Ascophyllum nodosum* as an aqueous extract.

Various processes of phytomelatonin extraction exist and are known by a person skilled in the art. For instance, phytomelatonin may be extracted from plants samples submitted to chemical method, with or without a homogenization step, for instance with a) liquid nitrogen treated plant samples and organic solvents such as methanol, chloroform or ethyl acetate or b) with water and methanol, or to physical methods using heat, microwave and/or sonication assisted extraction.

The natural form of tryptophan can be extracted from plants by any method known by a person skilled in the art such as with water or organic solvents, with or without a heating step [5].

The "nitrate content" corresponds to the mass of nitrate contained in a sample of dried plant. The nitrate content is expressed as weight per total weight of dried plant and can be determined by any appropriate experimental methods. For instance, the nitrate content may be measured by a method wherein the plant sample is dried, grinded, submitted to an aqueous extraction followed by the determination of the nitrate content for instance with a colorimetric determination using acid salicylic [6] or with a high performance ionic chromatography.

According to the present invention, the terms "decrease" or "reduction" refer to a significant reduction of the nitrate content of the plant supplied with melatonin and/or precursors thereof in comparison with a condition without supplying the plant with melatonin and/or precursors thereof. In the context of the present invention, a significant reduction of the nitrate content of the plant means a reduction by at least 30%, preferably by at least 40%, more preferably by at least by 50 %, even more preferably by at least 60%, in comparison with a condition without supplying the plant with melatonin and/or precursors thereof.

In the context of the present invention, an effective quantity of melatonin and/or a precursor thereof is supplied to the plant in order to decrease the nitrate content of the plant. In a particular embodiment, melatonin and/or a precursor thereof is supplied to the plant in a quantity that is effective for decreasing the nitrate content of the plant by at least 30 %, advantageously by at least 40 %, advantageously by at least by 50 %, advantageously by at least 60 %, compared to a plant that is not supplied with melatonin and/or precursor thereof.

According to a preferred aspect of the invention, the nitrate content in the leaves and/or fruits of the plant is decreased and more preferably in the leaves of the plant.

The effective quantity of melatonin and/or precursor thereof to be supplied to the plant depends on various parameters such as the plant considered, the rate of decrease targeted. The person skilled in the art will have no difficulty to determine the appropriate effective quantity of melatonin and/or precursor to be supplied to the plant through routine experimentation depending on the conditions considered.

According to a particular aspect, melatonin and/or precursor thereof is supplied to the plant in an amount from 0.1 g to 20 g/hectare, preferably from 0.2 g to 15g/hectare.

More preferably, melatonin and/or precursor thereof is supplied to the plant in an amount from 0.3 g to 10 g/hectare, preferably from 0.5 g/hectare.

According to this embodiment, melatonin and/or precursor thereof is advantageously distributed uniformly over a field or plant crop.

In particular in the method or use according to the invention, melatonin and/or precursor thereof is supplied to the plant at least one time every 2 to 7 days.

In a preferred embodiment of the invention, melatonin and/or precursor thereof is supplied to the plant one time every 2 to 4 days, preferably every 3 days. This embodiment is particularly advantageous for leaf vegetables such as spinach and lettuce.

In another embodiment, melatonin and/or precursor thereof is supplied to the plant one time every 7 days. This embodiment is particularly advantageous for legumes with silique(s) (meaning having a fruit with two fused carpels with the length being more than three times the width) such as beans and peas.

For plants with multiple harvests of their products (e.g. fruits, seeds, leaves) during their cultivation, melatonin and/or precursor thereof may be supplied to the plant several times during the plant cultivation, preferably every 1, 2, 3 or 4 days, preferably every 2 or 3 days, during the harvest period, to make sure that the nitrate content is decreased in the plant intended to be consumed during the harvest period.

In particular, in the method or use according to the invention, the plant is harvested a) within 1 to 5 days after supplying melatonin and/or precursor thereof to the plant or b) within 1 to 4 weeks after supplying melatonin and/or precursor thereof to the plant.

According to a specific embodiment of the invention, the plant is harvested within 1 to 5 days, preferably 1 to 4 days after supplying melatonin and/or precursor thereof to the plant, preferably within 1 to 3 days or within 1 to 2 days after supplying melatonin and/or precursor thereof to the plant.

According to a preferred embodiment, the plant is harvested 1, 2, 3 or 4 day(s), preferably 3 to 4 days and more preferably 3 days after supplying melatonin and/or precursor thereof to the plant.

This embodiment is particularly advantageous for leaf vegetables such as spinach and lettuce.

According to another specific embodiment of the invention, the plant is harvested within 1 to 4 weeks, preferably 1 to 3 weeks after supplying melatonin and/or precursor thereof to the plant. This embodiment is particularly advantageous for legumes with silique(s) (meaning having a fruit with two fused carpels with the length being more than three times the width) such as beans and peas.

These specific times of plant harvesting after the supply of melatonin and/or precursor thereof to the plant, that can be easily adapted to the plant treated, allows making sure that the nitrate content of the plant will be decreased in the plant intended to be consumed after its harvest.

In a particular aspect of the method or use according to the invention, (i) the plant has been supplied with a source of nitrogen prior to supplying melatonin and/or a precursor thereof to the plant and/or (ii) the plant is also supplied with a source of nitrogen while supplying melatonin and/or the precursor thereof to the plant.

The source of nitrogen is used as a fertilizer. Any type of source of nitrogen suitable for use on a plant may be used, for instance ammonium nitrate, urea.

In the context of the present invention, the term "fertilizer" is used to designate any product for which the use is intended to guarantee or improve the physical, chemical, or biological properties of soils as well as nutrition of the plants. Such a fertilizer may be applied via the roots or via the leaves of the plant. The source of nitrogen as fertilizer may be supplied to the plant direclty or in combination with other fertilizer components classically used in fertilizing compositions.

In a particular embodiment of the method or use according to the invention, the plant is an edible plant.

In the context of the invention, the terms "edible plants" refer to the plants consumed by humans or animals, especially mammals. The edible plants according to the present invention may be fruit plants, aromatic plants, flowering plants, leguminous plants, forage plants, vegetable plants, or cereal plants. On a preferred aspect of the invention the edible plant is selected from fruit plants, leguminous plants or vegetable plants, more preferably vegetable plants.

According to a preferred embodiment of the invention, the edible plant is a vegetable plant chosen among the following families *Poaceae, Fabaceae, Brassicaceae, Chenopodiaceae, Rosaceae, Asteraceae, Valerianaceae,* Amaryllidaceae, Malvaceae, Amaranthaceae, Polygonaceae, Apiaceae or *Solanaceae.* More preferably the edible plant is a vegetable plant chosen among the following families *Poaceae, Fabaceae, Brassicaceae, Chenopodiaceae, Rosaceae, Asteraceae, Valerianaceae, Amaranthaceae* even more preferably among the following families *Brassicaceae, Fabaceae, Chenopodiaceae, Amaranthaceae* or *Asteraceae.* In a preferred aspect of the invention, the edible plant is selected from lettuce, spinach, beans, broccoli, arugula, chicory, endives.

In a particular aspect of the method or use according to the present invention, the melatonin and/or precursor thereof is supplied to the leaves, preferably in a liquid form, and/or supplied to the roots, preferably in a liquid form or a solid form.

According the present invention, the solid form may be a powdered or a granulated composition.

Supplying the melatonin and/or precursor thereof to the leaves of the plant is particularly interesting for leafy vegetables plants, wherein the most part of the vegetative system of the plant, especially the leaves will be consumed by animals or humans. Supplying the melatonin and/or precursor thereof to the roots of the plant is particularly interesting for plants wherein the flowers, the roots, the fruits or the seeds are consumed by animals and humans. This latter mode of application is also particularly interesting for plants with several harvests.

In the context of the invention, the melatonin and/or precursor thereof may be supplied to the roots of the plant with a direct application to the soil, in a liquid or a solid form, or through a soil irrigation system such as a fertigation system in a liquid form.

In a preferred embodiment of the method or use according to the present invention, the melatonin and/or precursor thereof is sprayed on the leaves in a liquid form. In another preferred embodiment of the method or use according to the present invention, the melatonin and/or precursor thereof is supplied to the roots of the plant as a liquid form, preferably via a soil irrigation system.

According to a particular embodiment of the method or use of the invention, the melatonin and/or precursor thereof is supplied to the plant in a composition comprising from 10 µM to 2 mM of melatonin and/or precursor thereof, preferably from 20 µM to 1mM of melatonin and/or precursor thereof.

According to this embodiment, the composition may comprise a fertilizer, preferably a fertilizer selected from an amino acid, a plant hormone, an organic acid and/or a salt thereof, a seaweed extract, a humic substance, a plant extract, a source of sulfur, a source of calcium, a source of magnesium, a source of potassium, a source of phosphorus, a source of nitrogen or a mixture thereof. According to a preferred aspect, the fertilizer is a source of nitrogen and more preferably the fertilizer is nitrate, preferably as ammonium nitrate.

In a particular aspect of this embodiment, the composition comprises a surfactant. The composition may comprise one or several surfactants.

The surfactant is particularly useful to ensure the adherence of the composition on the plant leaves. The surfactant is particularly useful when the composition is sprayed on the leaves in a liquid form. Among the appropriate surfactants that may be used we can refer to the polysorbate-type surfactants such as the one from the Tween family. On a preferred aspect, the surfactant is Tween 20.

The composition used in the method or use according to the present invention may be in a liquid form or a solid form such as a powdered or a granulated composition.

In a preferred aspect of this embodiment, the composition is in a liquid form to be sprayed on the leaves. In another preferred aspect of this embodiment, the composition is in a liquid form to be supplied to the roots of the plant, preferably via a soil irrigation system.

In accordance with a third aspect, the present invention provides a composition comprising (i) from 10 µM to 2 mM, preferably from 20 µM to 1mM, of melatonin and/or precursor thereof, and (ii) a surfactant.

The composition according to the present invention may comprise one or several surfactants.

The surfactant is particularly useful to ensure the adherence of the composition on the plant leaves, especially when the composition is applied on the plant leaves. Among the appropriate surfactants that may be used we can refer to the polysorbate-type surfactants such as the one from the Tween family. On a preferred aspect, the surfactant is Tween 20.

The composition according to the present invention may be supplied to the leaves, preferably in a liquid form, and/or supplied to the roots, preferably in a liquid form or a solid form. The composition as a solid form may be a powdered or a granulated composition.

The composition according to the invention may comprise a fertilizer, preferably a fertilizer selected from an amino acid, a plant hormone, an organic acid and/or a salt thereof, a seaweed extract, a humic substance, a plant extract, a source of sulfur, a source of calcium, a source of magnesium, a source of potassium, a source of phosphorus, a source of nitrogen or a mixture thereof. According to a preferred aspect, the fertilizer is a source of nitrogen and more preferably the fertilizer is nitrate, preferably as ammonium nitrate.

In a particular aspect, the composition according to the invention comprises mineral nutrients selected from sulfur, calcium, magnesium, potassium, phosphorus, diverse forms of nitrogen, or micronutrients.

In accordance with a fourth aspect, the invention provides a plant cultivation process comprising the successive following steps:
a) Supplying melatonin and/or precursor thereof to a plant, whereby the plant nitrate content is decreased;
b) Harvesting the plant within 1 to 5 days after step a), such as within 1 to 3 days or within 1 to 2 days after step a), or within 1 to 4 weeks after step a) preferably within 1 to 3 weeks after step a).

In particular, step a) is carried out at least one time every 2 to 7 days.

In a specific embodiment, step a) is carried out one time every 2 to 4 days, preferably every 3 days. This embodiment is particularly advantageous for leaf vegetables such as spinach and lettuce.

In another embodiment, step a) is carried one time every 7 days. This embodiment is particularly advantageous for legumes with silique(s) (meaning having a fruit with two fused carpels with the length being more than three times the width) such as beans and peas.

For plants with multiple harvests of their products (e.g. fruits, seeds, leaves) during their cultivation, step a) may be carried out several times during the plant cultivation, preferably every 1, 2, 3 or 4 days, preferably every 2 or 3 days, during the harvest period, to make sure that the nitrate content is decreased in the plant intended to be consumed during the harvest period.

In particular, the plant is harvested i) within 1 to 5 days after step a) or ii) within 1 to 4 weeks after step a).

The plant is preferably harvested within 1 to 5 days, preferably 1 to 4 days after step a), preferably within 1 to 3 days or within 1 to 2 days after step a). According to an embodiment, the plant is harvested 1, 2, 3 or 4 day(s), preferably 3 to 4 days and more preferably 3 days after step a). This embodiment is particularly advantageous for leaf vegetables such as spinach and lettuce.

According to another embodiment, the plant is harvested within 1 to 4 weeks, preferably 1 to 3 weeks after step a). This embodiment is particularly advantageous for legumes with silique(s) (meaning having a fruit with two fused carpels with the length being more than three times the width) such as beans and peas.

The specific timing of step b) allows making sure that the plant nitrate content will be decreased in the plant intended to be consumed soon after its harvest.

In the plant cultivation process according to the present invention, melatonin and/or precursor thereof is supplied to the plant in a composition according to the third aspect of the present invention.

All the features presented above in link with the method or use according to the invention, apply identically to the plant cultivation process according to the invention.

The present invention is illustrated below by the following non-limiting examples.

### Brief description of the figures

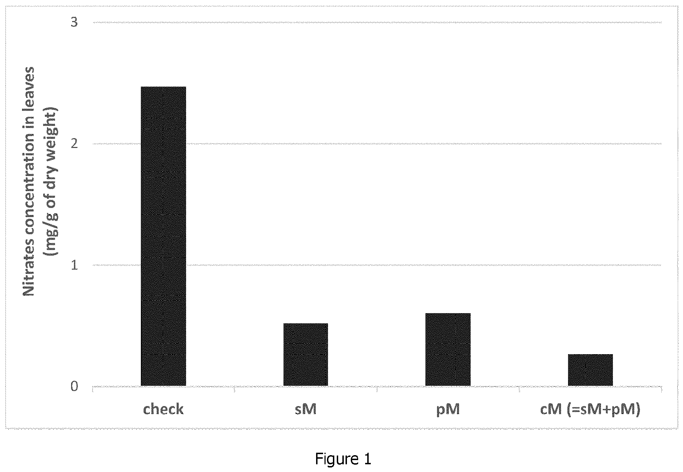

Figure 1: Figure 1 shows the effect of synthetic melatonin (sm, 20 µM), of phytomelatonin (pm, 20 µM), and of a combination of phytomelatonin and synthetic melatonin (cm, 20 µM), on nitrate concentration (mg/g of dry matter) in bean leaves.

### EXAMPLES

### Example 1: Quantification of phytomelatonin content in algae and algae extracts by UHPLC-MS/MS

The phytomelatonin is quantified in algae samples (dried and ground algae for raw material (Table 1) or after liquid extraction in hot water for aqueous extracts (Table 2)) extracted with 20% H₂O, 80% MeOH containing isotope-labelled internal standard (Melatonin-d4) and centrifuged to collect the supernatant. After evaporation, the extract was re-suspended in 2% of formic acid (Merck, Darmstadt, Germany) and cleaned by ABN solid phase extraction (SPE), (Biotage, Sweden). The melatonin was eluted with MeOH, evaporated and resuspended in 0.1% formic acid before injection into the system. For the UHPLC-MS/MS (Ultra high performance liquid chromatography-Tandem mass spectrometry) analysis, the separation and the detection were accomplished using a Nexera X2 UHPLC system (Shimadzu, Japan) coupled to a QTrap 6500+ mass spectrometer (Sciex, Canada) equipped with an IonDrive turbo V electrospray ionization (ESI) source. Sample separation was carried out by injecting 2 µL into a Kinetex EVO C18 100 x 2.1 mm, 2.6 µm column (Phenomenex, CA, USA) at a flow rate of 0.7 mL/min, and the column oven was maintained at 40°C. The mobile phases were composed of solvent A Milli-Q water containing 0.1% formic acid and solvent B acetonitrile (Fisher Optima, UK) containing 0.1% formic acid. The MS/MS acquisition was carried out in scheduled MRM (Multiple reaction monitoring) mode in positive polarity.

**Table 1: Phytomelatonin concentration (pg/mg of dry matter (DM)) in algae.**

| | **Origin** | **Material** | **Phytomelatonin (pg/mg DM)** |
|---|---|---|---|
| **Spirulina** | Microalgae | raw material | 137.7 |
| **Ulva Lactuca** | Macroalgae | raw material | 4.2 |
| **Fucus serratus** | Macroalgae | raw material | 3.4 |
| **Ascophyllum nodosum** | Macroalgae | raw material | 4.6 |

**Table 2: Phytomelatonin concentration (pg/ml) in algae aqueous extracts.**

| | **Origin** | **Material** | **Phytomelatonin (pg/ml)** |
|---|---|---|---|
| **Spirulina** | Microalgae | aqueous extract | 50.8 |
| **Ulva Lactuca** | Macroalgae | aqueous extract | 39.1 |
| **Ascophyllum nodosum** | Macroalgae | aqueous extract | 37.1 |

Table 1 shows that spirulina has a high content of phytomelatonin and Table 2 shows that the aqueous extracts of Spirulina and Ulva lactuca have a high content of phytomelatonin. The other tested algae and algae extracts are also natural sources of phytomelatonin.

### Example 2: Quantification of tryptophan content in algae, algae extracts and plants by UHPLC-MS

The tryptophan is quantified in algae samples (dried and ground algae for raw material (Table 3) or after liquid extraction in hot water for aqueous extracts (Table 4)) extracted with 70% H₂O, 30% MeOH and centrifuged to collect the supernatant. The pellet was extracted again with H₂O, centrifuged and the supernatant was pooled with the previous collection. For the UPLC-MS (Ultra performance liquid chromatography-Mass spectrometry) analysis, the separation and the detection were accomplished using an Acquity UPLC system (Waters, MA, USA) coupled to a Xevo G2-S QTof mass spectrometer (Waters) equipped with a LockSpray electrospray ionization (ESI) source. Sample separation was carried out by injecting 10 µL into a HSS T3 C18, 2.1 x 100 mm, 1.8 µm column (Waters) at a flow rate of 0.4 mL min⁻¹, and the column oven was maintained at 30 °C. The mobile phases were composed of solvent A Milli-Q water containing 0.1% formic acid (Merck, Darmstadt, Germany) and solvent B 50% MeOH, 50% acetonitrile (Fisher Optima, UK) containing 0.1% formic acid. The MS acquisition was carried out in positive sensitive ion mode with the following parameters: source voltage 0.5 kV; cone voltage 40 V; source temperature 120 °C; desolvation gas temperature 550°C and desolvation gas flow 800 L/h.

**Table 3: Tryptophan concentration (ng/mg of dry matter (DM)) in diverse algae and plants.**

| | **Origin** | **Material** | **Tryptophan (ng/mg DM)** |
|---|---|---|---|
| **Spirulina** | Microalgae | raw material | 0.4 |
| **Chlorella** | Microalgae | raw material | 0.3 |
| **Ulva Lactuca** | Macroalgae | raw material | 0.008 |
| **Fucus serratus** | Macroalgae | raw material | 0.3 |
| **Laminaria digitata** | Macroalgae | raw material | 0.4 |
| **Ascophyllum nodosum** | Macroalgae | raw material | 1.3 |
| **Soya germ** | Terrestral plant | raw material | 0.8 |
| **Soya fiber** | Terrestral plant | raw material | 2 |
| **Dried apple pomace** | Terrestral plant | raw material | 0.4 |

**Table 4: Tryptophan concentration (ng/ml) in diverse algae extracts.**

| | **Origin** | **Material** | **Tryptophan (ng/ml)** |
|---|---|---|---|
| **Ascophyllum nodosum** | Macroalgae | aqueous extract | 0.7 |
| **Ulva Lactuca** | Macroalgae | aqueous extract | 0.5 |

Table 3 shows that soya fiber is rich in tryptophan so as the algae *Ascophyllum nodosum.* The other tested plants and extracts are also natural sources rich in tryptophan.

### Example 3: Effect of synthetic melatonin or tryptophan on nitrate concentration in lettuce leaves

Lettuce plants (Lactuca sativa L.), were cultivated in pots containing an alkaline soil and receiving mineral fertilization including ammonium nitrate (NAC 27) in a greenhouse under controlled conditions (16h light/8h dark and 25°C). Once the commercial size of the plants was reached, the plants were divided in three groups. The Control group (CT) was sprayed with water and a surfactant (Tween 20) ; the melatonin (M) group was sprayed with a solution of 20 micromolar of synthetic melatonin and the adjuvant; and the tryptophan group (Tr) was sprayed with a solution of 20 micromolar of biosynthetic tryptophan and the adjuvant. The plants were harvested 48h and 120h after foliar application at 12 am. Nitrate concentration in the leaves was determined in leaf water extract by colorimetric detection at 415 nm after reaction of nitrate with salicylic acid in acidic medium and the formation of nitrosalicylate. Each treatment and harvest had five plants.

The results are shown in Table 5 here below.

**Table 5: Nitrate concentration (mg kg⁻¹ fresh weight) in lettuce leaves for each treatment and harvest time.**

| Harvest time | CT | Melatonin (20 micromolar) | Typtophan (20 micromolar) |
|---|---|---|---|
| 48h | 1563 | 738^{∗} | 780^{∗} |
| 120h | 1452 | 706^{∗} | 887^{∗} |

| | | | |
|---|---|---|---|
| ^{∗}Significant differences LSD test (p< 0.05) | | | |

The results presented in Table 5 show that the treatment with 20 micromolar of melatonin decreases the leaves nitrate content by 53% 48h after the treatment and by 50% 120h after the treatment. In consequence supplying a plant with phytomelatonin provides a significant decrease of the nitrate content in the leaves. This decrease is maintained at least 5 days after the treatment.

The results presented in Table 5 show that the treatment with 20 micromolars of tryptophan decreases the leaves nitrate content by 50% 48h after the treatment and by 39% 120h after the treatment. In consequence supplying a plant with tryptophan provides a significant decrease of the nitrate content in the leaves. This decrease is maintained at least 5 days after the treatment.

### Example 4: Effect of synthetic melatonin, phytomelatonin and a combination of phytomelatonin with synthetic melatonin on nitrate concentration in bean leaves.

French Bean plants (*Phaseolus vulgaris*), were cultivated in pots containing a peat substrate and receiving mineral fertilization including 40 kg N/hectare by ammonium nitrate and 20 kg SO₃/hectare by magnesium sulfate in a greenhouse under controlled conditions (16h light/8h dark and 25°C). The fertilizers were brought to the surface of the pots after 10 days of culture.

Just after adding the fertilizers, the plants were divided in four groups. The experiment was arranged in a randomized complete block design with six replicates. The Control group (CT) was without any treatment; 3 groups were treated by addition of an aqueous solution of (1) synthetic melatonin (sM) (20 micromolar), (2) phytomelatonin (pM) (20 micromolar) from a Spirulinaextract and (3) a combination of synthetic melatonin (10 micromolar), and phytomelatonin from a rich Spirulina extract (cM) (10 micromolar). Applications have been done in the soils 10 days after transplantation and one time every 7 days. Plants were harvested 6 weeks after transplanting and 2 weeks after the last treatment. Then leaves were dried and used for the determination of dry weight and nitrate content. Nitrate concentration in the leaves was determined by High Performance Ionic Chromatography. The results were expressed in mg NO₃/g of dry matter.

The results are showed in Table 6.

**Table 6: Nitrate concentration (mg.g⁻¹ of dry weight) in bean leaves for each treatment**

| **Treatment** | **Nitrate content (mg/g of dry weight)** |
|---|---|
| CT : without melatonin | 2.47 |
| sM : synthetic melatonin (20 micromolar) | 0.52^{∗} |
| pM : phytomelatonin (seaweed extract) (20 micromolar) | 0.60^{∗} |
| cM : synthetic melatonin + phytomelatonin (seaweed extract) (20 micromolar) | 0.27^{∗} |

| | |
|---|---|
| ^{∗}Significant differences LSD test (p< 0.05) | |

The results presented in Table 6 show that supplying the plant with 20 micromolar of synthetic melatonin allows decreasing the nitrate content in bean leaves by 79% X2 weeks after the last treatment. We can observe that supplying the plant with 20 micromolar of natural melatonin as phytomelatonin allows decreasing the nitrate content in bean leaves by 76% 2 weeks h after the last treatment.

Surprisingly, supplying the plant with 20 micromolar of a combination of 10 micromolar of synthetic melatonin and 10 micromolar of phytomelatonin allows decreasing the nitrate content in bean leaves by 89% 2 weeks after the last treatment. The combination of synthetic melatonin and phytomelatonin provides a greater effect for decreasing the nitrate content in bean leaves in comparison to melatonin alone or phytomelatonin alone.

### Bibliographic references

[1] Haq, A.U. et al, 1999, Effect of nitrogen, phosphorus and potassium on vegitative and reproductive growth of rose (Rosa centifolia), Int. J. Agric. Biol., 1: 27-29.
[2] Surat et al, 2014, Determination of Nitrate in the Edible Part of Vegetables from Markets Around Chiang Mai City, Northern Thailand by using High Performance Liquid Chromatography. Asian Journal of Agricultural Research, 8: 204-210.
[3] Joint FAO/WHO Expert Committee on food additives, 1996, Toxicological evaluation of certain food additives and contaminants. Geneva. World Health Organization, WHO Food Additives Series N°35.
[4] Paredes et al, 2009, Phytomelatonin: a review, Journal of Experimental Botany, Vol 60, Iss. 1, 57-69.
[5] Vitalini et al, 2020, LC-MS/MS-Based Profiling of Tryptophan-Related Metabolites in Healthy Plant Foods, Molecules, 25(2): 311.
[6] Zhao et al, 2017, Nitrate Assay for Plant Tissues. Bio-protocol 7(2): e.2029.

## Claims

1. Method for decreasing plant nitrate content, said method comprising supplying melatonin and/or a precursor thereof to the plant, whereby the plant nitrate content is decreased.

2. Use of melatonin and/or a precursor thereof for decreasing the plant nitrate content.

3. Method or use according to any of claims 1 to 2, wherein melatonin is synthetic melatonin and/or phytomelatonin, preferably synthetic melatonin and phytomelatonin.

4. Method or use according to any of claims 1 to 2, wherein the precursor of melatonin is tryptophan.

5. Method or use according to any of claims 1 to 4, wherein the plant nitrate content is decreased by at least 30 %, advantageously by at least 40%, advantageously by at least by 50 %, advantageously by at least 60%, compared to a plant that is not supplied with melatonin and/or precursor thereof.

6. Method or use according to any of claims 1 to 5, the melatonin and/or precursor thereof is supplied to the plant in an amount from 0.1 g to 20 g/hectare, preferably from 0.2 g to 15 g/hectare.

7. Method or use according to any of claims 1 to 6, wherein melatonin and/or precursor thereof is supplied to the plant at least one time every 2 to 7 days.

8. Method or use according to any of claims 1 to 7, wherein the plant is harvested a) within 1 to 5 days after supplying melatonin and/or precursor thereof to the plant or b) within 1 to 4 weeks after supplying melatonin and/or precursor thereof to the plant.

9. Method or use according to any of claims 1 to 8, wherein (i) the plant has been supplied with a source of nitrogen prior to supplying melatonin and/or a precursor thereof to the plant and/or (ii) the plant is also supplied with a source of nitrogen while supplying melatonin and/or the precursor thereof to the plant.

10. Method or use according to any of claims 1 to 9, wherein the plant is an edible plant.

11. Method or use according to any of claims 1 to 10, wherein the melatonin and/or precursor thereof is supplied to the leaves, preferably in a liquid form, and/or supplied to the roots, preferably in a liquid form or a solid form.

12. Method or use according to any of claims 1 to 11, wherein the melatonin and/or precursor thereof is supplied to the plant in a composition comprising from 10 µM to 2 mM of melatonin and/or precursor thereof, preferably from 20 µM to 1mM of melatonin and/or precursor thereof.

13. Method or use according to claim 12, wherein the composition comprises a surfactant.

14. Composition comprising (i) from 10 µM to 2 mM, preferably from 20 µM to 1mM, of melatonin and/or precursor thereof, and (ii) a surfactant.

15. Composition according to claim 14 comprising mineral nutrients selected from sulfur, calcium, magnesium, potassium, phosphorus, diverse forms of nitrogen, or micronutrients.

16. Plant cultivation process comprising the successive following steps:
a) Supplying melatonin and/or precursor thereof to a plant, whereby the plant nitrate content is decreased;
b) Harvesting the plant within 1 to 5 days after step a), such as within 1 to 3 days or within 1 to 2 days after step a), or within 1 to 4 weeks after step a) preferably within 1 to 3 weeks after step a).
